# EUROPÄISCHE PATENTANMELDUNG

(11) **EP 3 229 200 A1**
(43) Veröffentlichungstag der Anmeldung: **11.10.2017**
(21) Anmeldenummer: 17150771.8
(22) Anmeldetag: 10.01.2017
(51) Int. Cl.: G06Q 50/02, G06Q 10/06, G07C 5/00

(54) **VERWALTUNGSSYSTEM ZUR VERWALTUNG VON ARBEITS- UND BETRIEBSDATEN WENIGSTENS EINER LANDWIRTSCHAFTLICHEN ARBEITSMASCHINE**

(30) Priorität: 05.04.2016 DE 102016106224; 08.04.2016 DE 102016106516
(71) Anmelder: CLAAS E-Systems KGaA mbH & Co KG, 33330 Gütersloh (DE)
(72) Erfinder: Kuhlmann, Marcus, 33775 Versmold (DE); Kowohl, Magnus, 33332 Gütersloh (DE); Johann to Büren, Gerald, 49080 Osnabrück (DE); Mähler, Reinhold, 33330 Gütersloh (DE)
(74) Vertreter: Budach, Steffen

(57) **Zusammenfassung**

Die vorliegende Erfindung betrifft ein Verwaltungssystem zur Verwaltung von Arbeits- und Betriebsdaten wenigstens einer landwirtschaftlichen Arbeitsmaschine (1), umfassend:
- wenigstens eine Telemetrievorrichtung (5) zur Erfassung und Versendung von Zustandsdaten der wenigstens einen Arbeitsmaschine (1);
- eine Datenverarbeitungsvorrichtung (11), die zum Empfang und zur Verarbeitung der von der wenigstens einen Telemetrievorrichtung (5) versandten Zustandsdaten sowie zur Bereitstellung von feldspezifischen Daten von durch die wenigstens eine Arbeitsmaschine (1) zu bearbeitender Flächen (4, 6) eingerichtet ist;
wobei das Verwaltungssystem eingerichtet und ausgebildet ist, mittels der Zustandsdaten und der feldspezifischen Daten nichtfeldspezifische, von der wenigstens einen Arbeitsmaschine (1) befahrene nicht zu bearbeitende Flächen (7) repräsentierende Daten automatisiert zu qualifizieren und zu quantifizieren.

## Beschreibung

Die vorliegende Erfindung betrifft ein Verwaltungssystem gemäß dem Oberbegriff des Anspruches 1, ein Verfahren zur Verwaltung von Arbeits- und Betriebsdaten wenigstens einer landwirtschaftlichen Arbeitsmaschine gemäß dem Oberbegriff des Anspruches 9 sowie ein Computerprogramm gemäß dem Anspruch 13.

In der modernen Landwirtschaft kommt es zunehmend auf die hocheffiziente Nutzung der Produktionsressourcen an. Das betrifft einerseits den landwirtschaftlich genutzten Boden selbst, bei dem etwa die Anbau-, Dünge- und Erntevorgänge genau auf die Gegebenheiten und die Historie des jeweiligen Flächenteils anzupassen sind, sowie Arbeiten auf Hofflächen, wie beispielsweise das Verdichten von Silage, andererseits die landwirtschaftlichen Maschinen, welche sowohl in kurzer Zeit und ohne Leerlauf eine Agrarfläche bearbeiten oder auf einer Hoffläche arbeiten sollen als auch so eingesetzt werden sollen, dass unnötige Wartungen vermieden werden. Schließlich soll auch im betriebswirtschaftlichen Bereich eine maximale Ertrags-, Wirtschaftlichkeits- und Kostentransparenz erreicht werden.

Diese Ziele können insbesondere durch eine möglichst umfassende und lückenlose Datenerfassung bei den landwirtschaftlichen Arbeitsprozessen und eine zentralisierte Bündelung und Auswertung dieser Daten erreicht werden. Zum Sammeln und Übertragen dieser Daten sind Telemetrievorrichtungen bekannt, welche der Erfassung von Zustandsdaten einer Arbeitsmaschine dienen. Unter Zustandsdaten werden alle Betriebs- und Ernteparamter verstanden, welche während der Bearbeitung einer Fläche durch die Arbeitsmaschine mittels geeigneter Messeinrichtungen bestimmbar sind. Unter dem allgemeinen Begriff Arbeitsmaschine sind alle Einrichtungen zusammengefasst, welche im Zuge einer Bearbeitung einer landwirtschaftlich genutzten Fläche zum Einsatz kommen können. Dabei kann es sich beispielsweise um selbstfahrende Erntemaschinen sowie deren Vorsatzgeräte, um Traktoren und deren front- und heckseitig anbringbaren Anbaugeräte sowie um Ladewagen, Transportwagen oder dergleichen handeln.

Aus der EP 2 902 984 A1 ist ein Verwaltungssystem bekannt, welches mittels einer solchen Telemetrievorrichtung Zustandsdaten erfasst und an eine Datenverarbeitungsvorrichtung sendet. Die Datenverarbeitungsvorrichtung empfängt und verarbeitet die von der Telemetrievorrichtung versandten Zustandsdaten. Des Weiteren stellt die Datenverarbeitungsvorrichtung feldspezifische Daten von den durch eine Arbeitsmaschine zu bearbeitenden Flächen bereit. Die feldspezifischen Daten beinhalten insbesondere Informationen über die räumliche Lage und Kontur der zu bearbeitenden Flächen, bei denen es sich sowohl um Anbauflächen als auch um Hofstätten handeln kann. Zur Verbesserung der Beurteilung, ob eine Arbeitsmaschine effizient arbeitet, ist gemäß der EP 2 902 984 A1 vorgesehen, auf der zu bearbeitenden Fläche sowohl die Fahrwege und -zeiten zu erfassen, während der eine Bearbeitung erfolgt, als auch die Fahrwege und - zeiten, während der die Arbeitsmaschine sich auf der zu bearbeitenden Fläche bewegt, ohne eine Bearbeitung derselben durchzuführen. Aus der Bestimmung der Zeiten, innerhalb derer keine Bearbeitung erfolgt, soll gemäß der EP 2 902 984 A1 abgeleitet werden, durch welche Maßnahmen sich die Effizienz der Arbeitsmaschine bei der Bearbeitung der zu bearbeitenden Fläche steigern lässt.

Der Erfindung liegt die Aufgabe zu Grunde, ein Verwaltungssystem der eingangs genannten Art derart weiterzuentwickeln, dass eine umfassendere Erfassung und Auswertung aller von einer Arbeitsmaschine ausgeführten Tätigkeiten ermöglicht wird.

Die Aufgabe wird erfindungsgemäß durch die kennzeichnenden Merkmale der unabhängigen Patentansprüche 1, 9 und 13 gelöst.

Vorteilhafte Ausgestaltungen und Weiterbildungen sind Gegenstand der Unteransprüche.

Gemäß dem Anspruch 1 wird ein Verwaltungssystem zur Verwaltung von Arbeits- und Betriebsdaten wenigstens einer landwirtschaftlichen Arbeitsmaschine, vorgeschlagen, welches wenigstens eine Telemetrievorrichtung zur Erfassung und Versendung von Zustandsdaten der wenigstens einen Arbeitsmaschine sowie eine Datenverarbeitungsvorrichtung, die zum Empfang und zur Verarbeitung der von der wenigstens einen Telemetrievorrichtung versandten Zustandsdaten sowie zur Bereitstellung von feldspezifischen Daten von durch die wenigstens eine Arbeitsmaschine zu bearbeitenden Flächen eingerichtet ist, umfasst. Das Verwaltungssystem ist dadurch gekennzeichnet, dass das Verwaltungssystem eingerichtet und ausgebildet ist, mittels der Zustandsdaten und der feldspezifischen Daten nichtfeldspezifische, von der wenigstens einen Arbeitsmaschine befahrene nicht zu bearbeitende Flächen repräsentierende Daten automatisiert zu qualifizieren und zu quantifizieren. Das Verwaltungssystem berücksichtigt somit alle Fahrten der wenigstens einen Arbeitsmaschine auf durch diese zu bearbeitenden Flächen, wie Hofstätten und/oder Anbauflächen, als auch auf nicht zu bearbeitenden Flächen. Ebenso werden von dem Verwaltungssystem Fahrten mehrerer Arbeitsmaschinen berücksichtigt, wenn diese eine oder mehrere zu bearbeitende Flächen gemeinschaftlich bearbeiten beziehungsweise zum Erreichen dieser Flächen nicht zu bearbeitende Flächen befahren. Dies führt zu einer verbesserten und vereinfachten Erfassung aller im Zuge der Bearbeitung von Flächen auszuführenden Aktivitäten einer jeden Arbeitsmaschine. Bedienfehler aufgrund einer manuellen Erfassung von Daten durch eine Bedienperson der Arbeitsmaschine können vermieden werden. Darüber hinaus führt der Wegfall der manuellen Datenerfassung bei dem Verwaltungssystem zu einer Zeitersparnis bei einer Bedienperson der Arbeitsmaschine und/oder einem Farmmanager. Zur Qualifizierung der nichtfeldspezifischen Daten können neben Positionsortungsdaten zusätzlich Zustandsdaten der Arbeitsmaschine herangezogen werden, welche einen Rückschluss auf deren Betriebszustand ermöglichen. So deutet beispielsweise ein inaktives Arbeitsaggregat der Arbeitsmaschine oder ein abgeschaltetes Anbau- oder Vorsatzgerät in Verbindung mit den Positionsortungsdaten darauf hin, dass sich die Arbeitsmaschine auf einer nicht zu bearbeitenden Fläche befindet. Ein weiterer Vorteil resultiert daraus, dass die feldspezifischen Daten um nichtfeldspezifische Daten ergänzt werden können, um Lücken in der Kartierung einzelner Schläge zu schließen, wodurch eine verbesserte Verfahrensplanung erreichbar ist.

Hierbei handelt es sich bei den nicht zu bearbeitenden Flächen um Wegstrecken zu oder zwischen den zu bearbeitenden Flächen. Diese Fahrten wenigstens einer Arbeitsmaschine über nicht zu bearbeitende Flächen können mittels der Telemetrievorrichtung erfasst und von der Datenverarbeitungsvorrichtung automatisch ausgewertet werden, damit diese bei der Planung der Bearbeitung von Flächen und der Kostenkalkulation Eingang finden. Insbesondere können die Fahrten über nicht zu bearbeitende Flächen anders gewichtet werden als Fahrten auf zu bearbeitenden Flächen. Die unterschiedliche Gewichtung kann sich beispielsweise in unterschiedlichen Kostenansätzen niederschlagen, welche für das Befahren der unterschiedlichen Flächen veranschlagt werden.

Dabei können die nichtfeldspezifischen Daten durch die Datenverarbeitungsvorrichtung automatisiert in ein Datenformat konvertierbar sein, welches von einem nachgeordneten Managementsystem verarbeitbar ist. Durch die Datenverarbeitungsvorrichtung können einzelne Datensätze, die Daten zu einzelnen bearbeiteten Teilflächen und die zugehörigen befahrenen Wegstrecken zur Erreichung der jeweiligen Teilfläche beinhalten, zusammengeführt werden, wenn diese durch zumindest ein gemeinsames Merkmal miteinander verbunden sind. Das nachgeordnete Managementsystem ermöglicht die Weiterverarbeitung der von der Datenverarbeitungsvorrichtung konvertierten Daten unter anderem zur Erstellung oder Aktualisierung von feldspezifischen Daten. Darüber hinaus können mittels der von dem Managementsystem verarbeitbaren Daten betriebswirtschaftliche Abläufe automatisiert werden.

Vorzugsweise können die feldspezifischen Daten und die nichtfeldspezifischen Daten von der Datenverarbeitungsvorrichtung zur Visualisierung mittels einer Anzeigevorrichtung aufbereitbar sein. Hierdurch können arbeitsmaschinenspezifisch Geometrien von Start- und Zielflächen dargestellt werden, ebenso wie die Wegstrecke oder Wegstrecken, die die jeweilige Arbeitsmaschine zurückgelegt hat, um zu den jeweiligen Flächen zu gelangen. Die Visualisierung kann auf Basis von Satellitenbildern erfolgen. Hiermit korrespondierend werden weitere Parameter dargestellt, welche aus den Zustandsdaten der jeweiligen Arbeitsmaschine ableitbar sind. So lassen sich spezifische Informationen der jeweiligen Arbeitsmaschine die sich aus den Zustandsdaten ableiten lassen, wie beispielsweise Tätigkeitsart, Maschinenkennung, Kraftstoffverbrauch und dergleichen mehr, darstellen. Die Darstellung kann beispielsweise auf einer Anzeigevorrichtung an der Arbeitsmaschine und/oder einer dezentral angeordneten Anzeigeeinrichtung erfolgen.

Insbesondere können die nichtfeldspezifischen Daten der wenigstens einen Arbeitsmaschine anhand der Zustandsdaten individuell zuweisbar sein. Hierdurch kann auch eine Flotte von Arbeitsmaschinen, die zum Erreichen einer zu bearbeitenden Fläche nicht zu bearbeitende Flächen befahren haben, individuell erfasst und für eine Auswertung herangezogen werden.

Vorteilhafterweise kann die Datenverarbeitungsvorrichtung als eine zentral angeordnete, durch eine Kommunikationsinfrastruktur eingebundene Einheit ausgebildet sein. Als Kommunikationsinfrastruktur kommt bevorzugt das Internet zur Anwendung. Die von der Telemetrievorrichtung der wenigstens einen Arbeitsmaschine erfassten Zustandsdaten werden vorzugsweise über drahtlose Kommunikationswege an die Datenverarbeitungseinrichtung übersandt.

Dabei können feldspezifische Daten einer oder mehrerer von der wenigstens einen Arbeitsmaschine zu bearbeitenden Flächen von zumindest einer dezentralen Datenverarbeitungseinrichtung an die Datenverarbeitungsvorrichtung übermittelbar sein. Eine solche Datenverarbeitungseinrichtung kann sich in einer Betriebsstätte der Arbeitsmaschine befinden. Die Übermittlung der feldspezifischen Daten an die, vorzugsweise zentrale, Datenverarbeitungsvorrichtung erfolgt ebenfalls über das Internet.

Vorteilhafterweise kann die mindestens eine dezentrale Datenverarbeitungseinrichtung zur Ausführung des Managementsystems eingerichtet sein. Dazu kann die mindestens eine dezentrale Datenverarbeitungseinrichtung als ein portabler Hofrechner, beispielsweise als ein Laptop oder als ein Tablet-PC, ausgeführt sein.

Weiterhin betrifft die Erfindung gemäß dem unabhängigen Anspruch 9 ein Verfahren zur Verwaltung von Arbeits- und Betriebsdaten wenigstens einer landwirtschaftlichen Arbeitsmaschine, bei welchem mittels einer Telemetrievorrichtung Zustandsdaten der wenigstens einen Arbeitsmaschine erfasst und versendet werden, wobei die von der wenigstens einen Telemetrievorrichtung versandten Zustandsdaten von einer Datenverarbeitungsvorrichtung empfangen und verarbeitet werden, und dass von der Datenverarbeitungsvorrichtung feldspezifische Daten von durch die wenigstens eine Arbeitsmaschine zu bearbeitenden Flächen bereitgestellt werden, wobei mittels der Zustandsdaten und der feldspezifischen Daten nichtfeldspezifische, von der wenigstens einen Arbeitsmaschine befahrene, nicht zu bearbeitende Flächen repräsentierende Daten automatisiert qualifiziert und quantifiziert werden.

Dabei können die nichtfeldspezifischen Daten durch die Datenverarbeitungsvorrichtung automatisiert in ein Datenformat konvertiert werden, welches von einem nachgeordneten Managementsystem verarbeitet wird. Bei dem Datenformat kann es sich um ein ISOXML-konformes Datenformat handeln. Dies erlaubt den Einsatz von Managementsystemen unterschiedlicher Hersteller. Zudem können neben den Feldspezifischen Daten die nichtfeldspezifischen Daten auf der Datenverarbeitungsvorrichtung redundant vorgehalten werden, wodurch die Verfügbarkeit der Daten erhöht wird.

Vorteilhafterweise können die feldspezifischen Daten und die nichtfeldspezifischen Daten von der Datenverarbeitungsvorrichtung zur Visualisierung mittels einer Anzeigevorrichtung aufbereitet werden. Auf einer geeigneten Anzeigeeinrichtung können sowohl die befahrenen zu bearbeitenden Flächen als auch die befahrenen Wegstrecken zum Erreichen der zu bearbeitenden Flächen einer einzelnen Arbeitsmaschine dargestellt werden. Kommt mehr als eine Arbeitsmaschine zur Bearbeitung auf einer Fläche zum Einsatz, so werden die Zustandsdaten aller Arbeitsmaschine einbezogen und es erfolgt eine individualisierte Darstellung für jede einzelne Arbeitsmaschine.

Des Weiteren können die von der Telemetrievorrichtung übermittelten Zustandsdaten durch die Datenverarbeitungsvorrichtung automatisiert in Abhängigkeit von ihrem Gestehungsort unterschiedlich gewichtet werden. Hierdurch können produktive Zeiträume, innerhalb derer sich die wenigstens eine Arbeitsmaschine auf einem zu bearbeitenden Feld befunden hat, anders bewertet werden, als die Zeiträume beim Befahren von Wegstrecken auf nicht zu bearbeitenden Flächen. Werden die von der Telemetrievorrichtung übermittelten Zustandsdaten zum Zwecke der Abrechnung von Dienstleistungen herangezogen, lassen sich insbesondere die Fahrstrecken und -zeiten entlang der nicht zu bearbeitenden Flächen mit einem anderen Kostenansatz bewerten als die Fahrstrecken und -zeiten auf zu bearbeitenden Flächen.

Bezogen auf ein Computerprogramm wird das obige Problem durch den Gegenstand des Anspruchs 13 gelöst. Das erfindungsgemäße Computerprogramm weist Programmcode zur Durchführung aller Verfahrensschritte des erfindungsgemäßen Verfahrens auf, wenn das Computerprogramm in einem Computer, insbesondere der Datenverarbeitungsvorrichtung ausgeführt wird.

Die vorliegende Erfindung wird nachstehend anhand von in den Zeichnungen dargestellten Ausführungsbeispielen näher erläutert.

Es zeigen:
- Fig. 1: eine schematische Ansicht eines Verwaltungssystems zur Verwaltung von Arbeits- und Betriebsdaten wenigstens einer landwirtschaftlichen Arbeitsmaschine;
- Fig. 2: ein Ablaufdiagramm, welches den Datenfluss von Zustandsdaten zwischen einer Telemetrievorrichtung einer Arbeitsmaschine, einer zentralen Datenverarbeitungsvorrichtung und einer dezentralen Datenverarbeitungseinrichtung zeigt;
- Fig. 3: eine schematische Darstellung von einer Arbeitsmaschine befahrenen Flächen, die anhand von feldspezifischen Daten und Zustandsdaten bestimmt wurden.

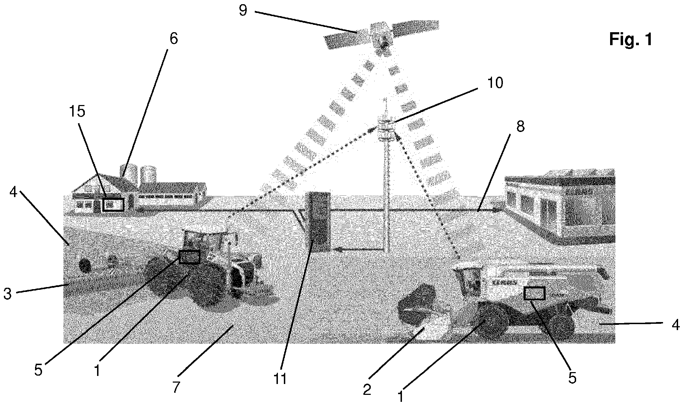

In Fig. 1 ist eine schematische Ansicht eines Verwaltungssystems zur Verwaltung von Arbeits- und Betriebsdaten wenigstens einer landwirtschaftlichen Arbeitsmaschine 1 dargestellt. Die wenigstens eine Arbeitsmaschine 1 kann als ein Mähdrescher mit daran angebrachtem Vorsatzgerät 2, wie beispielsweise einem Schneidwerk, sowie als ein Traktor mit einem daran angebauten Anbaugerät 3 ausgeführt sein. Weiterhin kann es sich bei der wenigstens einen Arbeitsmaschine 1 um einen Feldhäcksler und/oder einen Ladewagen und/oder einen Traktor mit Ballenpresse und dergleichen mehr handeln. Als Arbeitsmaschine 1 kommen alle selbstfahrenden Erntemaschinen, Fahrzeuge sowie von diesen angetriebene und/oder gezogene beziehungsweise angebaute Vorrichtungen in Betracht, welche für eine Bearbeitung einer landwirtschaftlich genutzten Fläche erforderlich sind. Die Arbeitsmaschinen 1 sind jeweils mit einer Telemetrievorrichtung 5 zur Erfassung und Versendung von Zustandsdaten der wenigstens einen Arbeitsmaschine 1 sowie des Vorsatzgerätes 2 oder des Anbaugerätes 3 ausgeführt. Die Telemetrievorrichtung 5 überträgt mittels eines drahtlosen Kommunikationsnetzwerkes 10, beispielsweise ein Mobilfunknetz, Zustandsdaten an eine, insbesondere zentrale, Datenverarbeitungsvorrichtung 11. Als Zustandsdaten werden alle Betriebs- und Ernteparamter angesehen, welche während der Bearbeitung einer Fläche durch die Arbeitsmaschine 1 mittels geeigneter Messeinrichtungen bestimmbar sind. Unter Zustandswerten in diesem Sinne werden beliebige gemessene oder berechnete Ist- oder Sollwerte verstanden, insbesondere gemessene physikalische Größen, geografische Positionen, Schaltzustände, laufende Zähler usw., aber auch nicht-physikalische Daten wie Namen, Seriennummern und Versionsnummern. Der Begriff Zustandswert meint den Wert selbst, etwa als Zahl, und nicht die Größe oder das Attribut, welches die Bedeutung des Zustandswertes angibt.

Weiterhin empfängt die Telemetrievorrichtung 5 von einem Positionsortungssystem 9 kontinuierlich Positionsdaten, welche mit den Zustandsdaten der Arbeitsmaschine 1 verknüpft werden. Mit dem Bezugszeichen 6 ist eine Hofstätte bezeichnet, die zugleich Betriebsstätte der Arbeitsmaschinen 1 sein kann. In der Hofstätte 6 befindet sich eine dezentrale Datenverarbeitungseinrichtung 15, welche durch ein Kommunikationsmedium 8, wie das Internet, mit der Datenverarbeitungsvorrichtung 11 zwecks Datenaustausch in Verbindung steht. Die dezentrale Datenverarbeitungseinrichtung 15 ist zur Ausführung eines Managementsystems eingerichtet, welches unter anderem der Auftragserfassung, - planung und -abrechnung dient.

Mit dem Bezugszeichen 4 sind von den Arbeitsmaschinen 1 zu bearbeitende Flächen bezeichnet. Bei den zu bearbeitenden Flächen 4 handelt es sich vor allem um landwirtschaftlich genutzte Anbauflächen, welche durch entsprechende Bodenbearbeitung, Aussaat, Düngung und etwaiger Ausbringung von Pflanzenschutzmitteln, sowie Ernten und Abtransport zu unterschiedlichen Zeitpunkten bearbeitet werden. Als zu bearbeitende Fläche kann auch der Teil der Hofstätte 6 angesehen werden, auf welchem beispielsweise Grassillage verdichtet wird oder Ballen zwecks Lagerung durch einen Frontlader aufgeschichtet werden. Von der Datenverarbeitungsvorrichtung 11 werden feldspezifische Daten bereitgestellt, welche von den Arbeitsmaschinen 1 herangezogen werden, um eine entsprechende Bearbeitung durchzuführen. Diese feldspezifischen Daten können von der dezentralen Datenverarbeitungseinrichtung 15 an die Datenverarbeitungsvorrichtung 11 übertragen werden. Mit dem Bezugszeichen 7 sind Flächen bezeichnet, die nicht von den Arbeitsmaschinen 1 bearbeitet werden. Es handelt sich dabei um Wegstrecken, welche die Arbeitsmaschinen 1 zurücklegen müssen, um die zu bearbeitenden Flächen 4 zu erreichen.

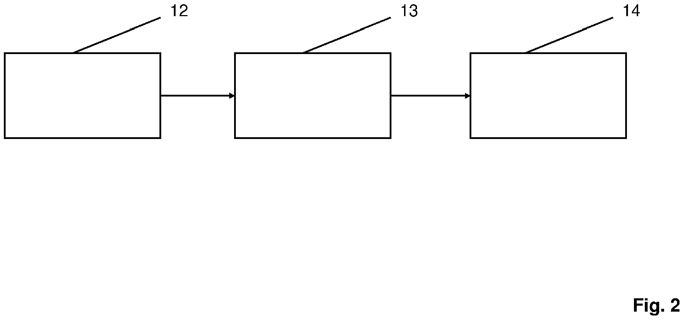

In Fig. 2 ist ein Ablaufdiagramm dargestellt, welches den Datenfluss von Zustandsdaten zwischen einer Telemetrievorrichtung 5 einer Arbeitsmaschine 1, der zentralen Datenverarbeitungsvorrichtung 11 und der dezentralen Datenverarbeitungseinrichtung 15 zeigt. In einem ersten Verarbeitungsschritt 12 erfolgt eine kontinuierliche automatische Erfassung und Übermittlung von Zustandsdaten durch die Telemetrievorrichtung 5 der jeweiligen Arbeitsmaschine 1 an die Datenverarbeitungsvorrichtung 11. Hiervon umfasst sind auch die Bewegungsdaten der jeweiligen Arbeitsmaschine 1, die anhand der von dem Positionsortungssystem 9 empfangenen Positionsdaten erstellt werden. Die Verknüpfung der Bewegungsdaten und der Zustandsdaten der Arbeitsmaschine 1 miteinander lässt Rückschlüsse auf die jeweilige Betriebssituation zu. Somit lässt sich auch bei inaktiven Arbeitsaggregaten unterscheiden, ob die Arbeitsmaschine 1 sich auf einer zu bearbeitenden Fläche 4 oder auf einer nicht zu bearbeitenden Fläche 7 bewegt.

In einem zweiten Verarbeitungsschritt 13 werden mittels der an die Datenverarbeitungsvorrichtung 11 übermittelten Zustandsdaten der Arbeitsmaschinen 1 und der von der dezentralen Datenverarbeitungseinrichtung 15 bereitgestellten feldspezifischen Daten nichtfeldspezifische, die von der wenigstens einen Arbeitsmaschine 1 befahrene nicht zu bearbeitende Flächen 7 repräsentierende Daten automatisiert qualifiziert und quantifiziert. Das heißt, die Datenverarbeitungsvorrichtung 11 filtert auf Basis der feldspezifischen Daten aus den Bewegungsdaten von der jeweiligen Telemetrievorrichtung 5 erfassten und übersandten Daten die nichtfeldspezifischen Daten heraus. Die nichtfeldspezifischen Daten repräsentieren die befahrenen, nicht durch die Arbeitsmaschinen 1 zu bearbeitenden Flächen 7, welche Wegstrecken zu oder zwischen den zu bearbeitenden Flächen 4 darstellen. Diese Wegstrecken sowie die zugehörigen Fahrzeiten werden aus den nichtfeldspezifischen Daten bestimmt, um diese zu einem späteren Zeitpunkt verwaltungstechnisch verarbeiten zu können. Die von den Arbeitsmaschinen 1 befahrenen nicht zu bearbeitenden Flächen 7 werden dabei bei der Auswertung durch die Datenverarbeitungsvorrichtung 11 anders gewichtet, als die von den Arbeitsmaschinen 1 befahrenen zu bearbeitenden Flächen 4. Die Datenverarbeitungsvorrichtung 11 konvertiert automatisch die nichtfeldspezifischen Daten in ein Datenformat, welche von einem nachgeordneten Managementsystem verarbeitbar ist. Insbesondere werden die Daten in das ISOXML-Format konvertiert. Die von der Telemetrievorrichtung 5 erfassten Zustandsdaten umfassen, wie weiter oben bereits ausgeführt, neben technischen Zustandsdaten der jeweiligen Arbeitsmaschine 1, die Rückschlüsse auf Betriebsart, Verbrauch, Wartungszustand, etc. zulassen, auch betriebswirtschaftlich relevante Informationen. Hierzu gehören beispielsweise Informationen über die Bedienperson der Arbeitsmaschine 1, der Maschinentyp der Arbeitsmaschine 1, die von der Arbeitsmaschine 1 befahrene zu bearbeitende Fläche 4 und die befahrenen nicht zu bearbeitenden Flächen 7. Anhand dieser Daten lassen sich durch die Datenverarbeitungsvorrichtung 11 Datensätze erstellen, die buchhalterisch verarbeitet werden können. Die Qualifizierung und Quantifizierung der von der Arbeitsmaschine 1 befahrenen nicht zu bearbeitenden Flächen 7 schafft mehr Transparenz und ermöglicht eine genauere Auswertung beziehungsweise Abrechnung. Eine nachträgliche manuelle Datenerfassung von zurückgelegten Wegstrecken zur Erreichung der jeweils zu bearbeitenden Flächen 4 beispielsweise durch die Bedienperson der Arbeitsmaschine 1 entfällt. Dies trägt zu einer Reduzierung des administrativen Aufwands bei. Weiterhin können Bedienfehler durch die Bedienperson der Arbeitsmaschine 1 reduziert werden, insbesondere da das manuelle Nachtragen dieser Fahrstrecken und -zeiten durch die Bedienperson entfällt.

In einem dritten Verarbeitungsschritt 14 werden die Daten an die dezentrale Datenverarbeitungseinrichtung 15 übermittelt und von dem darauf ausgeführten Managementsystem verarbeitet. So ermöglicht die Qualifizierung und Quantifizierung nichtfeldspezifischer Daten die befahrenen, nicht zu bearbeitenden Flachen 7 zu erfassen und, insbesondere monetär, zu bewerten. Aufgrund der unterschiedlichen Gewichtung unterscheiden sich die Bewertungen von befahrenen zu bearbeitenden Flächen 4 von den befahrenen nicht zu bearbeitenden Flächen 7. Durch den Verbleib der Daten auf der zentralen Datenverarbeitungsvorrichtung 11 liegt stets eine zusätzliche Datensicherung vor. Darüber hinaus werden in diesem Schritt 14 feldspezifische Daten an die dezentrale Datenverarbeitungseinrichtung 15 übertragen, um die feldspezifischen Daten zu aktualisieren.

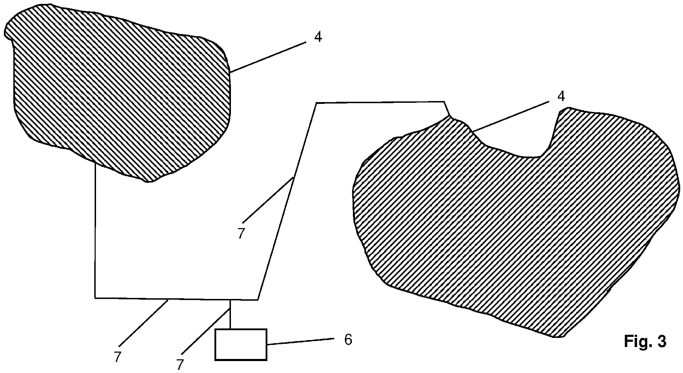

Die Darstellung in Fig. 3 zeigt eine schematische Darstellung der von den Arbeitsmaschinen 1 befahrenen zu bearbeitenden Flächen 4 und nicht zu bearbeitenden Flächen 7, das heißt zwischen den zu bearbeitenden Flächen 4 und der Hofstätte 6 zurückgelegte Wegstrecken, die anhand der von den Arbeitsmaschinen 1 übermittelten Zustandsdaten und feldspezifischen Daten bestimmt wurden. Wie weiter oben bereits ausgeführt, werden die feldspezifischen Daten der zu bearbeitenden Flächen 4 von der dezentralen Datenverarbeitungseinrichtung 15 an die jeweilige Arbeitsmaschine 1 übersandt. Im Verlauf des Befahrens der jeweiligen zu bearbeitenden Fläche 4 werden mittels der Telemetrievorrichtung 5 die Zustandsdaten erfasst und an die zentrale Datenverarbeitungsvorrichtung 11 zur Auswertung übertragen. Im Zuge dieser Auswertung werden die von der dezentralen Datenverarbeitungseinrichtung 15 empfangenen feldspezifischen Daten aktualisiert. Zusätzlich werden die von der Telemetrievorrichtung 5 erfassten und von der Datenverarbeitungsvorrichtung 11 automatisch ausgewerteten nichtfeldspezifischen Daten an die dezentrale Datenverarbeitungseinrichtung 15 übertragen, um den Datenbestand erforderlichenfalls zu aktualisieren.

### Bezugszeichenliste

- 1: Arbeitsmaschine
- 2: Vorsatzgerät
- 3: Anbaugerät
- 4: Zu bearbeitende Fläche
- 5: Telemetrievorrichtung
- 6: Hofstätte
- 7: Nicht zu bearbeitende Fläche
- 8: Kommunikationsmedium
- 9: Positionsortungssystem
- 10: Kommunikationsnetzwerk
- 11: Datenverarbeitungsvorrichtung
- 12: Erster Verarbeitungsschritt
- 13: Zweiter Verarbeitungsschritt
- 14: Dritter Verarbeitungsschritt
- 15: Dezentrale Datenverarbeitungseinrichtung

## Patentansprüche

1. Verwaltungssystem zur Verwaltung von Arbeits- und Betriebsdaten wenigstens einer landwirtschaftlichen Arbeitsmaschine (1), umfassend:
- wenigstens eine Telemetrievorrichtung (5) zur Erfassung und Versendung von Zustandsdaten der wenigstens einen Arbeitsmaschine (1);
- eine Datenverarbeitungsvorrichtung (11), die zum Empfang und zur Verarbeitung der von der wenigstens einen Telemetrievorrichtung (5) versandten Zustandsdaten sowie zur Bereitstellung von feldspezifischen Daten von durch die wenigstens eine Arbeitsmaschine (1) zu bearbeitender Flächen (4, 6) eingerichtet ist;
**dadurch gekennzeichnet,**
**dass** das Verwaltungssystem eingerichtet und ausgebildet ist, mittels der Zustandsdaten und der feldspezifischen Daten nichtfeldspezifische, von der wenigstens einen Arbeitsmaschine (1) befahrene nicht zu bearbeitende Flächen (7) repräsentierende Daten automatisiert zu qualifizieren und zu quantifizieren.

2. Verwaltungssystem nach Anspruch 1, **dadurch gekennzeichnet, dass** die nicht zu bearbeitenden Flächen (7) Wegstrecken zu oder zwischen zu bearbeitenden Flächen sind.

3. Verwaltungssystem nach einem der Ansprüche 1 oder 2, **dadurch gekennzeichnet, dass** die nichtfeldspezifischen Daten durch die Datenverarbeitungsvorrichtung (11) automatisiert in ein Datenformat konvertierbar sind, welches von einem nachgeordneten Managementsystem verarbeitbar ist.

4. Verwaltungssystem nach einem der Ansprüche 1 bis 3, **dadurch gekennzeichnet, dass** die feldspezifischen Daten und die nichtfeldspezifischen Daten von der Datenverarbeitungsvorrichtung (11) zur Visualisierung mittels einer Anzeigevorrichtung aufbereitbar sind.

5. Verwaltungssystem nach einem der Ansprüche 1 bis 4, **dadurch gekennzeichnet, dass** die nichtfeldspezifischen Daten der wenigstens einen Arbeitsmaschine (1) anhand der Zustandsdaten individuell zuweisbar sind.

6. Verwaltungssystem nach einem der Ansprüche 1 bis 5, **dadurch gekennzeichnet, dass** die Datenverarbeitungsvorrichtung (11) als eine zentral angeordnete, durch eine Kommunikationsinfrastruktur eingebundene Einheit ausgebildet ist.

7. Verwaltungssystem nach einem der Ansprüche 1 bis 6, **dadurch gekennzeichnet, dass** feldspezifische Daten einer oder mehrerer von der wenigstens einen Arbeitsmaschine (1) zu bearbeitenden Flächen von zumindest einer dezentralen Datenverarbeitungseinrichtung (15) an die Datenverarbeitungsvorrichtung (11) übermittelbar sind.

8. Verwaltungssystem nach Anspruch 7, **dadurch gekennzeichnet, dass** die mindestens eine dezentrale Datenverarbeitungseinrichtung (15) zur Ausführung des Managementsystems eingerichtet ist.

9. Verfahren zur Verwaltung von Arbeits- und Betriebsdaten wenigstens einer landwirtschaftlichen Arbeitsmaschine (1), bei welchem mittels einer Telemetrievorrichtung (5) Zustandsdaten der wenigstens einen Arbeitsmaschine (1) erfasst und versendet werden, wobei die von der wenigstens einen Telemetrievorrichtung (5) versandten Zustandsdaten von einer Datenverarbeitungsvorrichtung (11) empfangen und verarbeitet werden, und dass von der Datenverarbeitungsvorrichtung (11) feldspezifische Daten von durch die wenigstens eine Arbeitsmaschine (1) zu bearbeitender Flächen (4, 6) bereitgestellt werden, **dadurch gekennzeichnet, dass** mittels der Zustandsdaten und der feldspezifischen Daten nichtfeldspezifische, von der wenigstens einen Arbeitsmaschine (1) befahrene nicht zu bearbeitende Flächen (7) repräsentierende Daten automatisiert qualifiziert und quantifiziert werden.

10. Verfahren nach Anspruch 9, **dadurch gekennzeichnet, dass** die nichtfeldspezifischen Daten durch die Datenverarbeitungsvorrichtung (11) automatisiert in ein Datenformat konvertiert werden, welches von einem nachgeordneten Managementsystem verarbeitet wird.

11. Verfahren nach einem der Ansprüche 9 oder 10, **dadurch gekennzeichnet, dass** die feldspezifischen Daten und die nichtfeldspezifischen Daten von der Datenverarbeitungsvorrichtung (11) zur Visualisierung mittels einer Anzeigevorrichtung aufbereitet werden.

12. Verfahren nach einem der Ansprüche 9 bis 11, **dadurch gekennzeichnet, dass** die von der Telemetrievorrichtung (5) übermittelten Zustandsdaten durch die Datenverarbeitungsvorrichtung (11) automatisiert in Abhängigkeit von ihrem Gestehungsort unterschiedlich gewichtet werden.

13. Computerprogramm mit Programmcode zur Durchführung aller Verfahrensschritte der Ansprüche 9 bis 12, wenn das Computerprogramm von einem Computer ausgeführt wird.
